# EUROPEAN PATENT APPLICATION

(11) **EP 4 245 390 A1**
(43) Date of publication of application: **20.09.2023**
(21) Application number: 21892117.9
(22) Date of filing: 23.09.2021
(51) Int. Cl.: A63F 13/70, A63F 13/20, A63F 13/26

(54) **DEVICE FOR PROVIDING SLOT MACHINE GAME TYPE IMAGE CONTENT, AND METHOD THEREFOR**

(30) Priority: 12.11.2020 KR 20200150843
(71) Applicant: Autumnleaves Co., Ltd., Seoul 06540 (KR); Jo, Hyun Seok, Uiwang-si, Gyeonggi-do 16016 (KR)
(72) Inventor: JO, Hyun Seok, Uiwang-si, Gyeonggi-do 16016 (KR)
(74) Representative: Ter Meer Steinmeister & Partner
(86) International application number: PCT/KR2021/012940
(87) International publication number: WO 2022/102947

(57) **Abstract**

A device for providing slot machine game type image content according to the present invention includes an input unit configured to receive a user input, a display, a storage unit configured to store image content and a slot machine game driving module that generates a winning signal according to a form of a symbol combination displayed in a row when the symbol combination arranged in a form of a matrix stops rotating, and a processor configured to output a driving screen of the slot machine game driving module according to an input game operation signal when a bet amount and the game operation signal are input according to the user input received from the input unit, award points according to the winning signal when the winning signal is received from the slot machine game driving module, and control the display to output a playback screen of fragmented image content divided by a playback period of time, corresponding to at least one of the bet amount and the awarded points, of a total playback period of time of the image content stored in the storage unit.

## Description

### Technical Field

The present invention relates to a device and method of providing slot machine game type image content, and more specifically, to a device for providing slot machine game type image content, in which image content is provided in combination with a slot machine game system, and a method of providing slot machine game type image content.

### Background Art

Slot machines are game devices on which a game is played according to a predetermined procedure by inserting a certain amount of game media and that, when a pattern combination of a reel of a game result corresponds to a predetermined winning condition, allows a user to award points corresponding to the predetermined winning condition and a dividend higher than the inserted game media, and though slot machines have the negative effect of encouraging wasting of money, which is a problem in reality, they also provide a positive effect of entertainment.

However, conventional slot machines are not used as amusement machines on which to spend free time but as machines for the purpose of wasting money beyond the level of simple entertainment, in which the conventional game form is repeated and there is nothing to arouse new interest in users.

Further, conventional slot machines do not allow users to freely enjoy slot machines as a game, and are focused only on gambling functions, causing social side effects such as gambling addiction and the like.

Therefore, the need for a slot machine game method that can not only enhance the natural amusement of a slot machine but also induce a user to take appropriate rest is increasing.

### Disclosure

### Technical Problem

The present invention is directed to solving the above problems, and providing a device and method of providing slot machine game type image content in which an entertainment function is added to a slot machine game to induce new interest, reduce boredom, and enhance entertainment.

### Technical Solution

One aspect of the present invention provides a device for providing slot machine game type image content, which includes an input unit configured to receive a user input, a display, a storage unit configured to store image content and a slot machine game driving module that generates a winning signal according to a form of a symbol combination displayed in a row when the symbol combination arranged in a form of a matrix stops rotating, and a processor configured to output a driving screen of the slot machine game driving module according to an input game operation signal when a bet amount and the game operation signal are input according to the user input received from the input unit, award points according to the winning signal when the winning signal is received from the slot machine game driving module, and control the display to output a playback screen of fragmented image content divided by a playback period of time, corresponding to at least one of the bet amount and the awarded points, of a total playback period of time of the image content stored in the storage unit.

In this case, the processor may control the playback period of time of the divided and output fragmented image content to be proportional to at least one of the bet amount and the awarded points.

Further, the processor may control the display to output a menu for selecting any one among a plurality of pieces of image content provided according to the awarded points on one side of the screen, and output the playback screen of the fragmented image content selected according to a user input on the menu.

Further, the processor may control the display to output the playback screen of the fragmented image content associated with at least one symbol of the symbol combination.

Further, the processor may control the display to output the driving screen of the slot machine game driving module and the playback screen of the fragmented image content together at a preset ratio.

Another aspect of the present invention provides a method of providing slot machine game type image content, which includes receiving a bet amount and a game operation signal according to a user input, outputting a driving screen of a slot machine game driving module that generates a winning signal according to a form of symbol combination displayed in a row when the symbol combination arranged in a form of a matrix stops rotating according to the input game operation signal, awarding points according to the winning signal when the winning signal is generated from the slot machine game driving module, and outputting a playback screen of fragmented image content divided by a playback period of time, corresponding to at least one of the bet amount and the awarded points, of a total playback period of time of pre-stored image content.

In this case, in the outputting of the playback screen of the fragmented image content, the playback period of time of the divided and output fragmented image content may be output to be proportional to at least one of the bet amount and the awarded points.

Further, in the outputting of the playback screen of the fragmented image content, a menu for selecting any one among a plurality of pieces of image content provided according to the awarded points may be output on one side of the screen, and the playback screen of the fragmented image content selected according to a user input on the menu may be output.

Further, in the outputting of the playback screen of the fragmented image content, the playback screen of the fragmented image content associated with at least one symbol of the symbol combination may be output.

Further, in the outputting of the playback screen of the fragmented image content, the driving screen of the slot machine game driving module and the playback screen of the fragmented image content may be output together at a preset ratio.

### Advantageous Effects

According to various embodiments of the present invention as described above, boredom can be reduced by reducing boredom during a slot machine game to induce interest, and an adverse effect of the slot machine game can be minimized by inducing natural relaxation by allowing a user to watch image content provided during the game.

### Description of Drawings

In order to more fully understand the accompanying drawings cited in the detailed description of the present invention, a brief description of each drawing is provided.
FIG. 1 is a block diagram briefly illustrating a configuration of an image content providing device according to an embodiment of the present invention.
FIG. 2 is a diagram showing a driving screen of a slot machine game according to an embodiment of the present invention.
FIG. 3 is a diagram showing a screen on which image content is provided according to an embodiment of the present invention.
FIG. 4 is a diagram showing a screen for selecting image content according to an embodiment of the present invention.
FIG. 5 is a flowchart for describing an image content providing method according to an embodiment of the present invention.

### Best modes of the Invention

First, terms used in this specification and claims are selected from among general terms in consideration of functions in various embodiments of the present invention. However, these terms may vary depending on the intention of those skilled in the art, legal or technical interpretation, the advent of new technology, or the like. Further, some terms may be arbitrarily selected by applicants. These terms may be interpreted with the meanings defined in this specification, and when there is no specific term definition, the terms may be interpreted based on the content of this entire specification and common technical knowledge in the art.

Further, the same reference numerals or symbols in each drawing attached to this specification refer to parts or components that perform substantially the same function. For convenience of description and understanding, different embodiments will be described using the same reference numerals or symbols. That is, even if all components having the same reference numerals are illustrated in a plurality of drawings, the plurality of drawings do not represent one embodiment.

Further, in this specification and claims, terms including ordinal numbers such as "first," "second," etc. may be used to distinguish one component from another component. These ordinal numbers are used to distinguish the same or similar components from each other, and the meaning of the term should not be limitedly interpreted due to the use of these ordinal numbers. For example, such ordinal numbers should not be construed as limiting the use order or arrangement order of components combined with such ordinal numbers. In some cases, ordinal numbers may be used interchangeably.

As used herein, the singular forms "a" and "an" are intended to include the plural forms as well, unless the context clearly indicates otherwise. It will be further understood that the terms "comprise," "comprising," "include," and/or "including," when used herein, specify the presence of stated features, integers, steps, operations, elements, and/or components but do not preclude the presence or addition of one or more other features, integers, steps, operations, elements, components, and/or groups thereof.

Further, in the embodiments of the present invention, when a part is referred to as being connected to another part, this includes not only direct connection but also indirect connection through another medium. Further, the meaning that a certain part includes a certain component means that it may further include another component rather than excluding another component unless otherwise stated.

Hereafter, the present invention will be described in more detail with reference to the accompanying drawings.

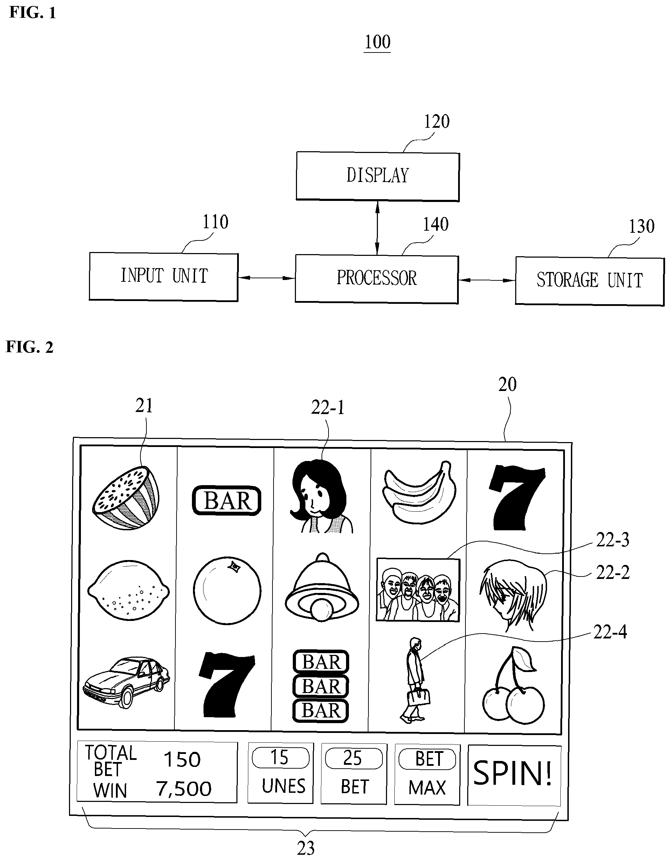

FIG. 1 is a block diagram briefly illustrating a configuration of an image content providing device according to an embodiment of the present invention.

An image content providing device 100 of the present invention may be implemented as an electronic device that can provide a slot machine type game screen and a playback screen of image content to a user.

The image content providing device 100 of the present invention includes an input unit 110, a display 120, a storage unit 130, and a processor 140.

The input unit 110 is a component for receiving a user input for controlling the overall operation of the image content providing device 100. User inputs, such as a driving command for driving a slot machine game, an operation command for operating the slot machine game, a control command for controlling playback of image content, and the like, may be received through the input unit 110, and the input unit 110 may include various buttons, levers, mice, keyboards, keypads, and the like necessary for this purpose.

The display 120 is a component for outputting a driving screen of a slot machine game driving module and outputting a playback screen of stored image content.

The display 120 may be implemented with various types of displays such as liquid-crystal display (LCD) panels, organic light-emitting diodes (OLEDs), liquid crystal on silicon (LCoS), digital light processing (DLP), and the like. In addition, the display 120 may also include a driving circuit, a backlight unit, and the like that can be implemented in the form of an a-Si thin-film transistor (amorphous silicon TFT), a low-temperature polycrystalline silicon (LTPS) TFT, an organic TFT (OTFT), or the like.

The display 120 may be included as a single configuration, but may be implemented as a plurality of displays for outputting each of a driving screen of a slot machine game driving module and a playback screen of image content.

Meanwhile, when the display 120 of the image content providing device 100 is implemented as a touch screen having a touch sensor, the input unit 110 may be implemented as software. In this case, the driving command, the operation command, the control command, and the like of the slot machine game may be received through inputs such as touch, drag, and the like on the touch screen.

The storage unit 130 is a component for storing a slot machine game driving module and image content.

The slot machine game driving module is a game software module for driving and executing a slot machine game, and determines success according to the form of a symbol combination displayed in a row to award points when the symbol combination arranged in the form of a matrix stops rotating. The slot machine game driving module rotates a physical reel or a virtual reel of the slot machine according to an input game operation signal to output a random symbol combination.

Further, the storage unit 130 may be configured to store winning determination information, a bet amount, score data, game history, and the like according to the symbol combination in the slot machine game.

The storage unit 130 may be implemented as one of a hard disk drive (HDD), a solid-state drive (SSD), a dynamic random-access memory (DRAM), a static random-access memory (SRAM), a ferroelectric random-access memory (FRAM), and a flash memory, and in addition, may also be implemented as a storage device that can record various types of data.

Further, the image content providing device 100 includes a communication unit (not illustrated), and may receive image content from an external device or server and provide the image content in a streaming method.

The communication unit may communicate with the external device or server through wired networks including Universal Serial Bus (USB) and Ethernet or various types of wireless networks including a local area network (LAN), Wi-Fi, Bluetooth, long-term evolution (LTE) (fourth generation (4G)) and fifth generation (5G).

The processor 140 is a component for controlling the overall operation of the image content providing device 100.

In particular, when a bet amount and a game operation signal are input according to the user input received from the input unit 110, the processor 140 may output the driving screen of the slot machine game driving module according to the input game operation signal.

In this case, when the processor 140 receives a winning signal from the slot machine game driving module, the processor 140 may display the awarded points corresponding to the winning signal through the display 120 and store the awarded points in the storage unit 130.

The processor 140 may control the display 120 to output a playback screen of fragmented image content divided by a playback period of time, corresponding to at least one of the bet amount and the awarded points, of a total playback period of time of image content stored in the storage unit 130.

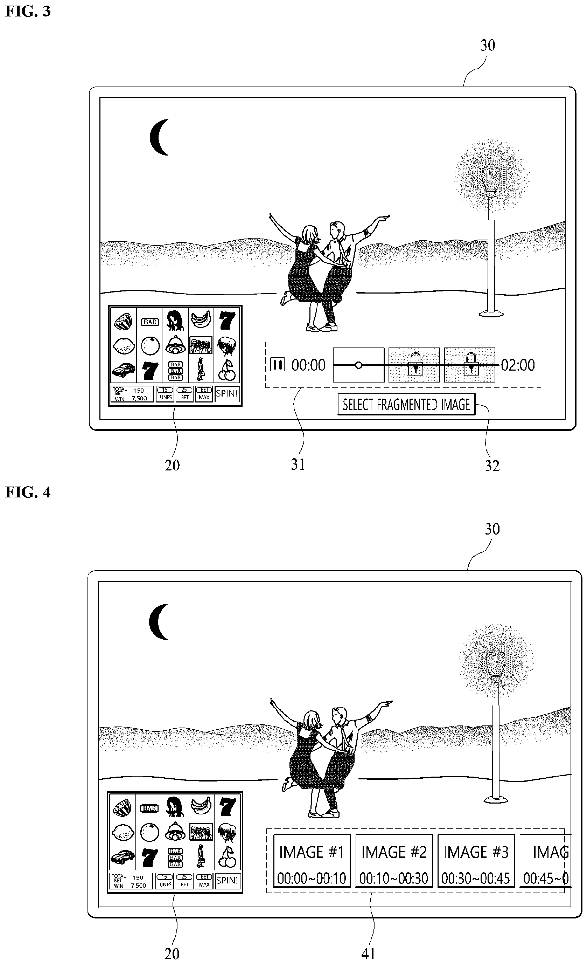

Meanwhile, the processor 140 may control the playback period of time of the divided and output fragmented image content to be proportional to at least one of the bet amount and the awarded points. This will be described below in detail with reference to FIG. 3.

Further, in the image content providing device 100 of the present invention, rotating reels may be physically implemented, and in this case, a reel unit in which a plurality of reels are arranged and a reel driving unit that provides power for rotationally driving each reel of the reel unit may be additionally included.

FIG. 2 is a diagram showing a driving screen of a slot machine game according to an embodiment of the present invention.

A driving screen 20 of a slot machine game output to the display 120 may display symbols constituting a plurality of reels, and when the plurality of reels stop after rotating in a flowing manner from top to bottom, in the case of a win based on a matching form (symbols and arrangement position) of a symbol combination displayed in a row, a winning message and points awarded from the win may be displayed.

According to an embodiment of the present invention, the symbols displayed on the driving screen 20 may be symbols related to image content provided through the image content providing device 100. For example, the symbols may include photographs 22-1 and 22-2 of actors and actresses, including male and female protagonists of the image content, a still cut or poster 22-3 containing a scene of the image content, a picture 22-4 that symbolizes a specific person, object, or subject appearing in the image content, and the like.

In this case, a symbol image may be an image pre-produced to correspond to the provided image content, or may be a thumbnail image of a scene extracted from the image content. Therefore, even when the symbol image is not pre-produced, the symbol image may be downloaded and stored, or may be extracted from image content to be streamed, and produced.

For the slot machine game, a general method in which, when a symbol combination arranged in a row in a line on which a user bets matches, the user wins may be basically adopted, but the slot machine game may be played in various other preset methods. Each symbol may be set with various images, and the odds of winning and a dividend rate may vary depending on each symbol.

Further, depending on the game type, various factors, such as a horizontal line, other matching shapes such as a diagonal line, a required number of columns in which symbols match in a line, and the like, may be set as winning conditions.

Further, although FIG. 2 shows an example of a slot machine game with five rows of reels, the present invention is not limited thereto, and the slot machine game may be implemented with various numbers of rows such as three or four rows.

The user may place a bet or input a spin command to proceed with one turn a of game through a graphic user interface (GUI) 23 displayed on a lower end of the driving screen 20, and may check awarded points, a bet amount, a dividend rate, a winning amount, and the like.

When each reel stops rotating, the slot machine game driving module may compare the symbol combination of the line on which the user bets on the stopped reel with the winning determination information to determine success, and in the case of a win such as a jackpot or the like, may transmit a winning signal to the processor 140.

When the winning signal is received, the processor 140 may award points according to the winning signal and the bet amount and display the awarded points on the screen 20.

In this case, the processor 140 may play a part of the image content stored in the storage unit 130 back as a reward whenever one turn of a game ends or a winning signal is received.

Specifically, as illustrated in FIG. 3, the processor 140 may control the display 120 to output a playback screen 30 of fragmented image content divided by a playback period of time, corresponding to the bet amount and/or the awarded points, of a total playback period of time of the image content (drama, movie, etc.) stored in the storage unit 130.

In this case, the playback period of time of the divided and output fragmented image content may be proportional to the bet amount and/or the awarded points. For example, assuming that movie content with a running time of 2 hours is provided and fragmented image content is provided each time one turn of a game ends, 5-minute fragmented image content may be played when 10,000 KRW is bet, and 25-minute fragmented image content may be played when 50,000 KRW is bet.

Thereafter, when the next turn of the game ends or the winning signal is re-received, fragmented image content after the played fragmented image content may be played back. For example, when the fragmented image content has been played during a playback section from 0 to 10 minutes in the previous turn, the fragmented image content during a playback section from 10 to 20 minutes may be played back.

Further, assuming that the fragmented image content is played back whenever the winning signal is received, 10-minute fragmented image content may be played back when the 100 points are awarded according to the winning, and 20-minute fragmented image content may be played back when 200 points are awarded. When the awarded points correspond to the largest jackpot score, the entire image content may be played.

The processor 140 may provide the fragmented image content divided in units of seconds, or may also provide the fragmented image content divided in various units such as 1-minute periods, 5-minute periods, and the like. Therefore, assuming that a division unit is 10 minutes, fragmented image content having a playback period of time of 10 minutes may be played back when the awarded points are 100 points or more and less than 200 points, and fragmented image content having a playback period of time of 20 minutes may be played back when the awarded points are 200 points or more and less than 300 points.

In this case, the provided image content may be a plurality of pieces of fragmented image content that are divided in preset division units and pre-stored.

Meanwhile, as illustrated in FIG. 3, the processor 140 may control the display 120 to output the driving screen 20 of the slot machine game and the playback screen 30 of the fragmented image content together at a preset ratio.

When the fragmented image content is played back, the driving screen 20 of the slot machine game may be shrunk and displayed on one side of the playback screen 30 of the fragmented image content. In this case, the user may operate the slot machine game on the shrunk driving screen 20 while watching the fragmented image content. In this case, the user may select a switch button to switch between an area in which the playback screen 30 of the fragmented image content is displayed and an area in which the driving screen 20 of the slot machine game is displayed.

However, this is only an example, and the driving screen 20 of the slot machine game and the playback screen 30 of the fragmented image content may be displayed at the same ratio or at various other ratios.

Further, as illustrated in FIG. 3, a control menu 31 for controlling the playback screen 30 may be displayed, and the user may play/stop/pause the playback screen 30 and adjust the volume in the control menu 31, or may select a playback section with a control bar.

Further, the user may select and play any one among the pieces of fragmented image content acquired so far by selecting an "image piece selection" button 32.

Specifically, as illustrated in FIG. 4, when the user selects the "image piece selection" button 32, the processor 140 may control the display 120 to output a menu 41 for selecting any one among the plurality of pieces of fragmented image content provided according to the awarded points, and output the playback screen of the fragmented image content that is selected according to a user input on the menu 41.

When the user performs a scrolling operation on the menu 41 through the input unit 110 or a touch, the processor 140 may scroll and output the acquired fragmented image content.

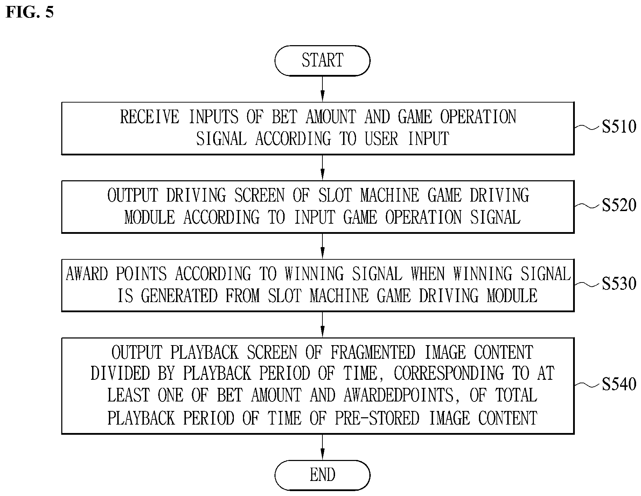

FIG. 5 is a flowchart for describing an image content providing method according to an embodiment of the present invention.

First, inputs of a bet amount and a game operation signal are received according to a user input (S510).

Thereafter, when a symbol combination arranged in the form of a matrix stops rotating according to the input game operation signal, a driving screen of a slot machine game driving module that generates a winning signal according to a form of symbol combination displayed in a row is output (S520).

Thereafter, when a winning signal is generated from the slot machine game driving module, points are awarded according to the winning signal (S530).

Thereafter, a playback screen of fragmented image content divided by a playback period of time, corresponding to at least one of the bet amount and the awarded points, of a total playback period of time of the pre-stored image content is output (S540).

In this case, the playback period of time of the divided and output fragmented image content may be proportional to at least one of the bet amount and the awarded points.

Further, a menu for selecting any one among a plurality of pieces of image content provided according to the awarded points may be output on one side of the screen, and the playback screen of the fragmented image content that is selected according to a user input on the menu may be output.

Further, the output fragmented image content may be fragmented image content related to at least one symbol of the symbol combination.

Further, when the playback screen of the fragmented image content is output, the driving screen of the slot machine game driving module and the playback screen of the fragmented image content may be output together at a preset ratio.

According to various embodiments of the present invention as described above, boredom can be reduced by reducing boredom during a slot machine game to induce interest, and an adverse effect of the slot machine game can be minimized by inducing natural relaxation by allowing a user to watch image content provided during the game.

Meanwhile, the image content providing method according to various embodiments described above may be implemented as a program and stored in various recording media. That is, a computer program that can be processed by various processors to execute the above-described image content providing method may be stored in a recording medium and used.

For example, a non-transitory computer readable medium may be provided in which a program that performs the operations of i) receiving a bet amount and a game operation signal according to a user input, ii) outputting a driving screen of a slot machine game driving module that generates a winning signal according to a form of a symbol combination displayed in a row when the symbol combination arranged in a form of a matrix stops rotating, iii) awarding points according to the winning signal when the winning signal is generated from the slot machine game driving module, and iv) outputting a playback screen of fragmented image content divided by a playback period of time, corresponding to at least one of the bet amount and the awarded points, of a total playback period of time of pre-stored image content is stored.

A non-transitory computer readable medium is not a medium on which data is stored momentarily, such as a register, cache, or memory, but a medium on which data is stored semi-permanently and which can be read by a device. Specifically, the above-described various applications or programs may be stored and provided in non-transitory computer readable media such as a compact disc read only memory (CD-ROM), a digital video disc (DVD), a hard disk, a Blu-ray disc, a USB, a memory card, an ROM, and the like.

Meanwhile, while exemplary embodiments of the present invention have been illustrated and described above, the present invention is not limited to the specific embodiment described above. Those skilled in the art to which the present invention belongs may variously modify the present invention without departing from the gist of the present invention claimed by the appended claims, and the modifications should not be understood separately from the technical spirit or perspective of the present invention.

## Claims

1. A content providing device, which is a device for providing slot machine game type image content, comprising:
an input unit configured to receive a user input;
a display;
a storage unit configured to store image content and a slot machine game driving module that generates a winning signal according to a form of a symbol combination displayed in a row when the symbol combination arranged in a form of a matrix stops rotating; and
a processor configured to output a driving screen of the slot machine game driving module according to an input game operation signal when a bet amount and the game operation signal are input according to the user input received from the input unit, award points according to the winning signal when the winning signal is received from the slot machine game driving module, and control the display to output a playback screen of fragmented image content divided by a playback period of time, corresponding to at least one of the bet amount and the awarded points, of a total playback period of time of the image content stored in the storage unit.

2. The content providing device of claim 1, wherein the processor controls the playback period of time of the divided and output fragmented image content to be proportional to at least one of the bet amount and the awarded points.

3. The content providing device of claim 1, wherein the processor controls the display to output a menu for selecting any one among a plurality of pieces of image content provided according to the awarded points on one side of the screen, and output the playback screen of the fragmented image content selected according to a user input on the menu.

4. The content providing device of claim 1, wherein the processor controls the display to output the playback screen of the fragmented image content associated with at least one symbol of the symbol combination.

5. The content providing device of claim 1, wherein the processor controls the display to output the driving screen of the slot machine game driving module and the playback screen of the fragmented image content together at a preset ratio.

6. A content providing method, which is a method of providing slot machine game type image content, comprising:
receiving a bet amount and a game operation signal according to a user input;
outputting a driving screen of a slot machine game driving module that generates a winning signal according to a form of symbol combination displayed in a row when the symbol combination arranged in a form of a matrix stops rotating according to the input game operation signal;
awarding points according to the winning signal when the winning signal is generated from the slot machine game driving module; and
outputting a playback screen of fragmented image content divided by a playback period of time, corresponding to at least one of the bet amount and the awarded points, of a total playback period of time of pre-stored image content.

7. The content providing method of claim 6, wherein, in the outputting of the playback screen of the fragmented image content, the playback period of time of the divided and output fragmented image content is output to be proportional to at least one of the bet amount and the awarded points.

8. The content providing method of claim 6, wherein, in the outputting of the playback screen of the fragmented image content, a menu for selecting any one among a plurality of pieces of image content provided according to the awarded points is output on one side of the screen, and the playback screen of the fragmented image content selected according to a user input on the menu is output.

9. The content providing method of claim 6, wherein, in the outputting of the playback screen of the fragmented image content, the playback screen of the fragmented image content associated with at least one symbol of the symbol combination is output.

10. The content providing method of claim 6, wherein, in the outputting of the playback screen of the fragmented image content, the driving screen of the slot machine game driving module and the playback screen of the fragmented image content are output together at a preset ratio.

11. A computer program stored in a recording medium to execute the method of any one claim of claims 6 to 10.
